# EUROPEAN PATENT APPLICATION

(11) **EP 4 597 435 A1**
(43) Date of publication of application: **06.08.2025**
(21) Application number: 23870943.0
(22) Date of filing: 27.09.2023
(51) Int. Cl.: G06T 17/20

(54) **MESH RECONSTRUCTION METHOD AND APPARATUS, DEVICE, AND STORAGE MEDIUM**

(30) Priority: 28.09.2022 CN 202211194091
(71) Applicant: Shining 3D Tech Co., Ltd., Hangzhou, Zhejiang 311258 (CN)
(72) Inventor: JIANG, Chen, Hangzhou, Zhejiang 311258 (CN); ZHANG, Jian, Hangzhou, Zhejiang 311258 (CN); JIA, Yanming, Hangzhou, Zhejiang 311258 (CN)
(74) Representative: Metida
(86) International application number: PCT/CN2023/122134
(87) International publication number: WO 2024/067716

(57) **Abstract**

The present disclosure relates to a mesh reconstruction method, an apparatus, a device and a storage medium. The mesh reconstruction method includes: constructing a data structure according to acquired three-dimensional scanning data and a preset mesh side length, and determining node information of a target tree node among a plurality of tree nodes included in the data structure; determining a level of a mesh to be extracted of the target tree node according to the target data, where the target data is obtained according to the three-dimensional scanning data and/or according to the data structure; calculating a scalar field of the target tree node according to node information of a neighboring tree node corresponding to the target tree node and the node information of the target tree node, and obtaining a reconstructed mesh model according to the scalar field. The method provided by the present disclosure reduces an influence of noise and further improves an accuracy of the reconstructed mesh model.

## Description

This disclosure claims a priority of the Chinese patent application filed with the China Patent Office on September 28, 2022, with application number 2022111940918 and entitled "MESH RECONSTRUCTION METHOD, APPARATUS, DEVICE AND STORAGE MEDIUM", the entire contents of which are incorporated by reference in this disclosure.

### TECHNICAL FIELD

The present disclosure relates to a technical field of three-dimensional reconstruction, and in particular to a mesh reconstruction method, an apparatus, a device, and a storage medium.

### BACKGROUND

With the development of computer hardware and industrial scanning technology, 3D (3 Dimensional) scanning has been widely used in industrial design, manufacturing, medical and art design. Compared with traditional manual measurement methods, 3D scanning can capture model data more quickly and accurately, and processing scan data on a computer can greatly reduce the cost of trial and error. The step of converting 3D scan data into a 3D mesh model is called mesh reconstruction, and the quality of mesh reconstruction will directly affect the accuracy of the mesh model. Due to data noise, data missing, and equipment accuracy, the reconstructed mesh model is often affected by noise, resulting in a relatively low accuracy of the reconstructed mesh model.

### SUMMARY

### (I) Technical issues to be resolved

The present disclosure is to solve a problem that an existing three-dimensional reconstruction model has a low accuracy.

### (II) Technical solution

In order to solve the above technical problem, the present disclosure provides a mesh reconstruction method, including:
Constructing a data structure according to three-dimensional scanning data that is acquired and a preset mesh side length, and determining node information of a target tree node among a plurality of tree nodes comprised in the data structure;
Determining a level of a mesh to be extracted of the target tree node according to target data, the target data being obtained according to the three-dimensional scanning data and/or according to the data structure;
Calculating a scalar field of the target tree node according to node information of a neighboring tree node in a same level as the target tree node and the node information of the target tree node, and obtaining a reconstructed mesh model according to the scalar field.

In a second aspect, a mesh reconstruction apparatus is also provided, comprising:
A construction module, configured for constructing a data structure according to three-dimensional scanning data that is acquired and a preset mesh side length, and determining node information of a target tree node among a plurality of tree nodes comprised in the data structure;
A determination module, configured for determining a level of a mesh to be extracted of the target tree node according to target data, the target data being obtained according to the three-dimensional scanning data and/or according to the data structure;
A reconstruction module, configured for calculating a scalar field of the target tree node according to node information of a neighboring tree node in a same level as the target tree node and the node information of the target tree node, and obtaining a reconstructed mesh model according to the scalar field.

In a third aspect, an electronic device is also provided, including:
A storage device;
A processor; and
A computer program;
The computer program being stored in the storage device and configured to be executed by the processor to implement the above-mentioned mesh reconstruction method.

In a fourth aspect, a computer-readable storage medium is also provided, on which a computer program is stored, and when the computer program is executed by a processor, the steps of the above-mentioned mesh reconstruction method are implemented.

### (III) Beneficial effects

The above technical solution provided by the embodiment of the present disclosure has the following advantages compared with a prior art:
The embodiment of the present disclosure provides a mesh reconstruction method, including: constructing a data structure according to three-dimensional scanning data that is acquired and a preset mesh side length, and determining node information of a target tree node among a plurality of tree nodes comprised in the data structure; determining a level of a mesh to be extracted of the target tree node according to target data, the target data being obtained according to the three-dimensional scanning data and/or according to the data structure; calculating a scalar field of the target tree node according to node information of a neighboring tree node in a same level as the target tree node and the node information of the target tree node, and obtaining a reconstructed mesh model according to the scalar field. The method provided by the present disclosure reduces an influence of noise and further improves an accuracy of the reconstructed mesh model.

It is to be understood that the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.

In order to more clearly illustrate the embodiments of the present application or the technical solutions in the prior art, the drawings required for use in the embodiments or the description of the prior art will be briefly introduced below. Obviously, for ordinary technicians in this field, other drawings can be obtained based on these drawings without paying any creative labor.
FIG. 1 is a schematic flow chart of a mesh reconstruction method provided by an embodiment of the present disclosure;
FIG. 2 is a schematic plan view of an octree provided by an embodiment of the present disclosure ;
FIG. 3a is a schematic diagram of a scalar field provided by an embodiment of the present disclosure;
FIG. 3b is a schematic diagram of another scalar field provided by an embodiment of the present disclosure;
FIG. 4 is a schematic diagram of a flow chart of a mesh reconstruction method provided by an embodiment of the present disclosure;
FIG. 5 is a schematic diagram of a flow chart of a mesh reconstruction method provided by an embodiment of the present disclosure;
FIG. 6 is a schematic structural diagram of a mesh reconstruction apparatus provided by an embodiment of the present disclosure;
FIG. 7 is a schematic diagram of a structure of an electronic device provided in an embodiment of the present disclosure.

### DETAILED DESCRIPTION

In order to make a purpose, a technical solution and advantages of the embodiments of the present disclosure clearer, the technical solution in the embodiments of the present disclosure will be clearly and completely described below. Obviously, the described embodiments are part of the embodiments of the present disclosure, not all of the embodiments. Based on the embodiments in the present disclosure, all other embodiments obtained by ordinary technicians in this field without creative work are within the scope of protection of the present disclosure.

At present, a mesh reconstruction technology finds a zero isosurface by directly calculating a scalar field in a space, and then extracts a mesh based on the zero isosurface. According to the way of calculating the scalar field, one type is to calculate an approximate directed distance from a voxel mesh around each scan point to the isosurface based on information of each scanning point. These directed distances constitute the scalar field in the space. This method does not distinguish a data quality. All areas of a model are reconstructed with a single resolution mesh of the same smoothness, that is, the length of each mesh edge is roughly the same, that is, the resolution of the reconstructed mesh is basically the same. The other type is to solve a global implicit function so that a gradient of the function at each scanning point is approximately equal to a normal of the scan point. This method determines a mesh side length only according to a density of the data itself. A dense area uses a small mesh edge reconstruction to highlight features, and a sparse area uses a larger mesh edge reconstruction to ensure smoothness. That is, the reconstructed mesh has multiple resolutions, but in this case, the higher the resolution, the more vertices under the same area, and the more memory is occupied. To sum up, during a mesh reconstruction, due to data noise, data missing, and equipment precision limitations, the reconstructed mesh has large noise in some areas, that is, the noise is relatively large in data sparse areas, and the noise resistance is poor, resulting in a relatively low accuracy of a mesh model; secondly, the reconstructed mesh model cannot adaptively reconstruct meshes of different smoothness in different areas, that is, it is impossible to use a coarse reconstruction for areas that the user is not interested in, and use a fine reconstruction for areas of interest, and the generated mesh model is large in scale, and a time for generating the mesh model and a memory consumption are also relatively large.

In view of the above technical problems, the embodiment of the present disclosure provides a mesh reconstruction method, which presets a plurality of mesh resolutions, defines each resolution corresponding to a different level, and determines a resolution level of each scanning point (three-dimensional point) in three-dimensional scanning data; constructs an adaptive octree according to the three-dimensional scanning data according to a preset minimum mesh side length, the octree includes a plurality of levels, each level includes a plurality of tree nodes in the form of cubes, and calculates the node information of all tree nodes in the first n levels of the octree from deep to shallow, specifically, an average coordinate, an average normal, and a weighted sum of all scanning points falling in the cube corresponding to the tree node are used as the node information of the tree node; according to the node information of the tree node, calculates the density of the scanning points included in the tree node, and determines the resolution level of the tree node according to the density, where the resolution level of the tree node and/or the resolution level of the scanning point can be determined; then, based on the resolution level of the tree node and/or the resolution level of the scanning point, determines the level of the mesh that the tree node should extract; changes a calculation direction of the local scalar field calculated by the tree node, and calculates a contribution of the neighboring tree node to the current tree node to obtain the local scalar field on the current tree node, and obtains the global scalar field from the local scalar field, and finally extracts the zero isosurface according to the global scalar field at different levels to obtain a multi-resolution mesh model. The following embodiments are described in detail.

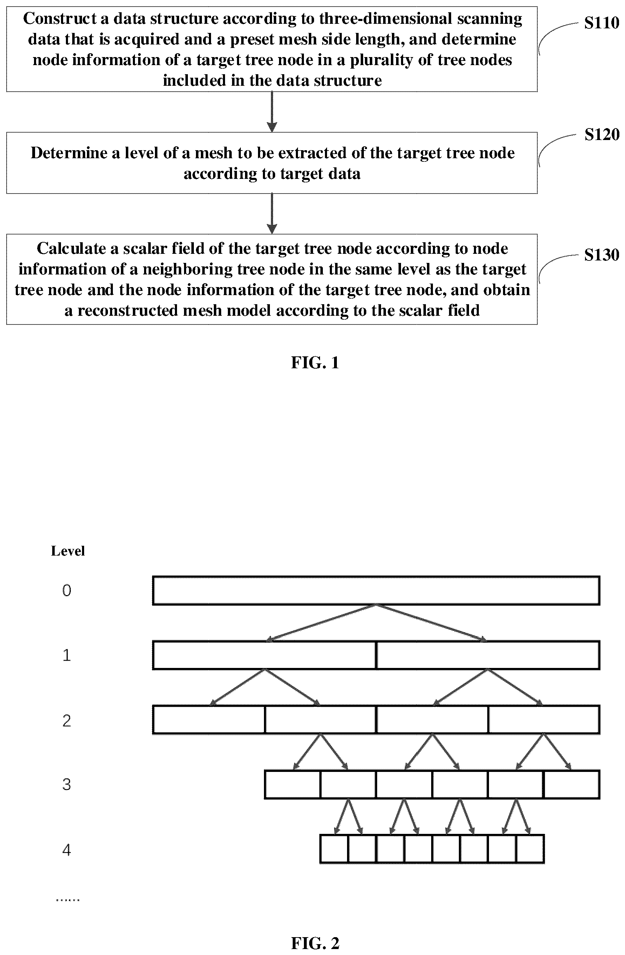

FIG. 1 is a flow chart of a mesh reconstruction method provided by an embodiment of the present disclosure, which is applied to a terminal or a server. The following embodiments are described by taking the server executing the mesh reconstruction method as an example. The server receives three-dimensional scanning data and performs a mesh reconstruction to obtain a multi-resolution mesh model. The three-dimensional scanning data may be sent by a scanning device, which is equipped with a depth camera. The scanning device uses the depth camera to take a plurality of photos of the scanned object, and then a three-dimensional reconstruction is performed based on the plurality of photos to obtain the three-dimensional scanning data including a plurality of scanning points. In one embodiment, after the scanning device takes the plurality of photos, the plurality of photos are directly transmitted to the server. The server performs the three-dimensional reconstruction based on the plurality of photos to generate the three-dimensional scanning data including the plurality of scanning points, and then perform the mesh reconstruction based on the three-dimensional scanning data. In another embodiment, after the scanning device takes the plurality of photos, the scanning device performs the three-dimensional reconstruction based on the plurality of photos, and transmits the generated three-dimensional scanning data including the plurality of scanning points to the server, and the server performs the mesh reconstruction based on the three-dimensional scanning data. The present disclosure also includes other possible embodiments, which are not limited here.

The method for the server to perform the mesh reconstruction specifically includes following steps S110 to S130 as shown in FIG. 1:
S110, a data structure is constructed according to three-dimensional scanning data that is acquired and a preset mesh side length, and node information of a target tree node among a plurality of tree nodes included in the data structure is determined.

The three-dimensional scanning data includes scanning information of a plurality of scanning points, and the scanning information of each scanning point includes a coordinate, a normal and a weight.

It is understandable that the three-dimensional scanning data transmitted by the scanning device is obtained. The three-dimensional scanning data includes scanning information of the plurality of scanning points related to a scanned object, and the scanning information includes the coordinates, normals and weights of the scanning points. After obtaining the three-dimensional scanning data, an octree is constructed according to the preset mesh side length to obtain the data structure with an octree shape. The octree can be understood as a large cube that surrounds all scanning points. The large cube is divided into a plurality of small cubes. Each division can be recorded as a level. Each cube can be called a tree node. There are only eight child nodes of any node in the octree, that is, one cube is divided into eight small cubes. Among them, the preset mesh side length is a minimum mesh side length (i.e., a point distance), and the minimum mesh side length defines a side length of a cube with a smallest unit in the octree. After obtaining the data structure with the octree shape, the node information of the tree node is calculated according to the scanning information of all scanning points in the cube corresponding to the tree node.

Optionally, in the above S110, constructing the data structure with the octree shape and determining the node information of the tree node can be specifically implemented by the following steps:
Determining a side length of a cubic space occupied by the scanned object; based on the three-dimensional scanning data, constructing the data structure with the octree shape according to the side length of the cubic space occupied by the scanned object and the preset mesh side length, where the data structure includes a plurality of levels, each level includes a plurality of tree nodes with a cubic shape; determining the tree node that includes at least one scanning point from all tree nodes included in a preset level of the data structure as the target tree node; calculating the node information of the target tree node according to the scanning information of the scanning point included in the target tree node.

Optionally, constructing the data structure with the octree shape can be specifically implemented by the following steps:
According to the side length of the cubic space occupied by the scanned object, constructing the data structure with the octree shape that includes all scanning points in the three-dimensional scanning data. During a construction process, if the side length of the cube with the smallest unit in the data structure is less than or equal to the preset mesh side length, a completed data structure is obtained.

It is understandable that determining the side length of the cubic space occupied by the scanned object is to determine a contour of the scanned object. Then, according to the side length of the cubic space occupied by the scanned object and the preset mesh side length, the data structure with the octree shape that can wrap all the scanning points of the scanned object is constructed. An octree is a tree-like data structure used to describe a three-dimensional space. Each node of the octree represents a volume element of a cube. Each node has eight child nodes. The volume elements represented by the eight child nodes are added together to equal a volume of a parent node. The constructed data structure is a large cube that can wrap the scanned object. Multiple small cubes are divided inward level by level based on the side length of the large cube until the side length of the cube with the smallest unit is less than or equal to the preset mesh side length. Then a process of downward division is ended. A number of divisions represents a number of levels (level number) of the octree, and the number of levels also represents a depth of the octree. For example, taking the preset mesh side length as 1 as an example, the side length of the large cube that wraps all the scanning points of the scanned object is 8. Divide the side length of 8 by 2 to obtain 8 cubes with a side length of 4 as a first level, and divide downward in this way until the side length of the smallest cube is less than or equal to 1, obtaining a tree data structure. The principle of downward division is that a current cube includes at least one scanning point. The data structure with the octree shape that has been constructed includes a plurality of levels, and each level includes a plurality of tree nodes with the cube shape. Among all the tree nodes corresponding to the preset level of the data structure, the tree node including at least one scanning point in the cube is determined as the target tree node, that is, the remaining tree nodes except the tree nodes not including the scanning point in all the tree nodes included in first n levels are the target tree nodes. The number of target tree nodes is multiple, that is, from deep to shallow, among all the tree nodes corresponding to the first n levels, the tree node including at least one scanning point in the cube is determined as the target tree node, where the preset level is less than the number of levels of the octree. Finally, the node information of the target tree node is calculated according to the scanning information of the scanning point included in the target tree node, the node information of the target tree node is stored, and the scanning information of all scanning points in the cube of the target tree node is deleted to release memory.

For example, see FIG. 2, which is a schematic diagram of an octree provided by an embodiment of the present disclosure, and is described by taking a plane of a divided part of a cube as an example. The octree of FIG. 2 includes 5 levels, each rectangle represents a tree node, and corresponds to a cube in space at the same time. A node pointed by an arrow represents a child node, and a node from which the arrow originates represents a parent node. The cube corresponding to each parent node can be evenly divided into 8 equilateral small cubes, corresponding to 8 child nodes. Among them, the 0th level refers to the large cube that wraps the scanned object, the 1st level is to further evenly divide the large cube to obtain two cubes 1, the large cube can be recorded as a parent node, and the cube 1 is recorded as a child node, and the 2nd level is to further evenly divide the cube 1 to obtain two cubes 2. At this time, the cube 1 is the parent node, and the cube 2 is the child node. And so on, an even division is continued downward until the side length of the cube with the smallest unit is less than or equal to the preset mesh side length. Among them, if one cube 2 of the second level does not include any scanning point, in this case, it is not necessary to continue to evenly divide the cube downward. If another cube 2 of the second level includes at least one scanning point, the cube is continued to evenly divide downward to obtain cubes 3.

Optionally, the node information of the target tree node may be specifically obtained by the following steps:
Calculating an average coordinate of all scanning points included in the target tree node; calculating an average normal of all scanning points included in the target tree node; calculating a weighted sum of all scanning points included in the target tree node; obtaining the node information of the target tree node based on the average coordinate, the average normal and the weighted sum.

It is understandable that the acquired three-dimensional scanning data includes scanning information of the scanning point, and the scanning information includes the coordinate, normal and weight of the scanning point in the scanning space, where the larger the weight of the scanning point, the closer the scanning point is to an actual surface of the scanned object. For each target tree node, an average value of the coordinates of all scanning points included in the cube corresponding to the target tree node is calculated to obtain the average coordinate, an average value of the normals of all scanning points is calculated to obtain the average normal, and the weighted sum of all scanning points is calculated, and then the average coordinate, the average normal, and the weighted sum compose the node information of the target tree node. The node information of the tree node is generated according to the scanning information of the scanning point, such that a conversion from the scanning point to the tree node is realized.

S120, a level of a mesh to be extracted of the target tree node is determined according to the target data.

Where the target data is obtained based on the three-dimensional scanning data and/or based on the data structure.

It is understandable that, based on the above S110, a resolution level of each scanning point in the three-dimensional scanning data is determined, and/or a resolution level of the target tree node in the data structure is determined, the target data includes at least one of the resolution level of the scanning point and the resolution level of the target tree node. After determining the target data, the level of the mesh that the target tree node should extract is determined according to the target data.

S130, a scalar field of the target tree node is calculated according to the node information of a neighboring tree node at a same level as the target tree node and the node information of the target tree node, and a reconstructed mesh model is obtained according to the scalar field.

Optionally, the scalar field calculated in S130 can be implemented by the following steps:
According to the node information of the neighboring tree node in the same level as the target tree node and the node information of the target tree node, calculating a local scalar field of the target tree node; determining a global scalar field of the same level according to the local scalar fields of all target tree nodes in the same level; obtaining the reconstructed mesh model by extracting a zero isosurface according to the global scalar fields at different levels.

Optionally, the above-mentioned calculation of the local scalar field of the tree node is specifically implemented by the following steps:
The neighboring tree node in the same level as the target tree node is determined.

According to the average coordinate and the average normal in the node information of the neighborhood tree node, a target plane passing through the neighborhood tree node is determined, and a directed distance from the target tree node to the target plane is calculated.

The local scalar field of the target tree node is calculated according to the node information of the neighborhood tree node, the node information of the target tree node and the directed distance.

It can be understood that, based on the above S120, for each target tree node, the neighboring tree node that is in the same level and adjacent to the target tree node is determined. Being in the same level means that the resolution of the mesh extracted for the target tree node is the same. For example, all target tree nodes with a mesh side length of 1 are in the same level, and all target tree nodes with a side length of 2 are in the same level. That is, each target tree node actively selects a plurality of tree nodes (neighboring tree nodes) with the same resolution and adjacent to each other. At a junction of different resolutions, due to different sizes of the neighboring tree nodes of the target tree node, it is necessary to change a calculation direction of the scalar field or a gradient field. That is, when traversing each target tree node that has extracted the level of the mesh, a contribution of the neighboring tree node to the target tree node is calculated, rather than a contribution of the target tree node to the neighboring tree node is calculated. Specifically, for each neighboring tree node, a plane passing through the neighboring tree node is determined according to its average coordinate and average normal. This plane is recorded as the target plane, and the directed distance from the target tree node to the plane is calculated, that is, one directed distance of the target tree node can be calculated according to the node information of each neighboring tree node, and then an average of all directed distances is taken to obtain information of the scalar field of the target tree node. A method for calculating the directed distance of the target tree node according to the node information of the neighboring tree node is called an inward calculation, and the calculation of the directed distance of each neighboring tree node according to the node information of the target tree node is called an outward calculation. Compared with a traditional outward calculation, the calculation of the scalar field by the inward calculation can avoid an introduction of additional noise due to a difference in resolution at the junction of different resolutions. The following example is explained by calculating the scalar field as an example. The level of the mesh to be extracted for each target tree node is counted, all target tree nodes belonging to the same level are traversed, and the local scalar field is calculated for each target tree node. One feasible way is to calculate the local scalar field of the target tree node according to the node information of the neighboring tree node and the node information of the target tree node. The specific method of calculating the scalar field is not described in detail. Another feasible way is to calculate the local scalar field of the target tree node only according to the node information of the target tree node. In this case, the local scalar field that is calculated is a distance value of each target tree node, which represents a estimated distance from a center of the target tree node to the zero isosurface. The zero isosurface can be understood as a real surface of the scanned object. Subsequently, the global scalar field of the same level is determined according to the local scalar fields of all target tree nodes in the same level. The global scalar field is a three-dimensional function, which represents a surface. The surface is called an isosurface of the global scalar field. After the node information of all target tree nodes in the same level is input into the global scalar field, an output function value is the same. A method of obtaining the global scalar field according to the local scalar field is not described in detail. The reconstructed mesh model is obtained by extracting the zero isosurface according to the global scalar fields at different levels. The global scalar field at each level represents a mesh surface of a different resolution. The obtained mesh model is actually a mesh model with multiple mesh side lengths.

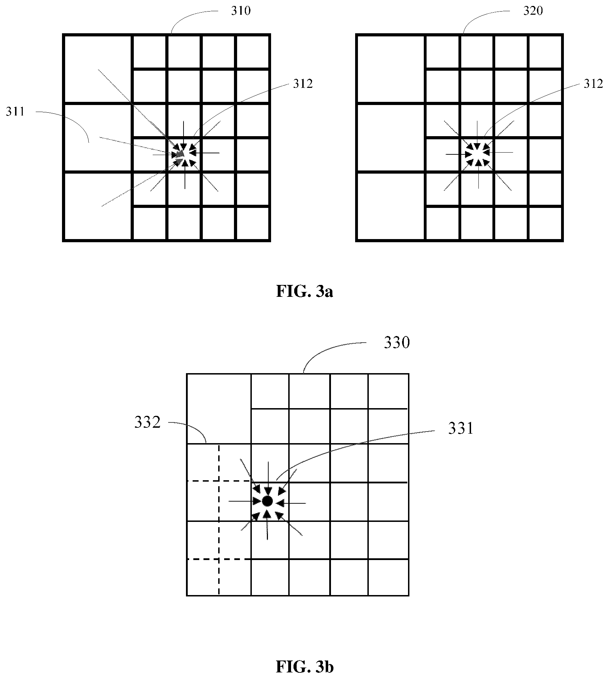

Exemplarily, see FIG. 3a, which is a schematic diagram of a scalar field provided by an embodiment of the present disclosure. FIG. 3a includes a plane schematic diagram 310 before the calculation direction of the scalar field is changed and a plane schematic diagram 320 after the calculation direction of the scalar field is changed. The plane schematic diagram 310 has two resolutions, one is a square with a mesh side length of 2, and the other is a square with a mesh side length of 1. At the junction of different resolutions in the plane schematic diagram 310, for a square 311 with a side length of 2, its neighbor includes a square 312 with a side length of 1 pointed to by an arrow, and the square 312 is obtained by evenly dividing the square 311, while for the square 312, its neighbor does not include the square 311, that is, the square 311 is not adjacent to the square 312, and do not have the same mesh side length. Therefore, it is necessary to change the calculation direction of the scalar field of square 312, that is, the square 312 adaptively determines its neighbor with the same resolution and are adjacent to it, rather than passively accepting an influence of a neighbor with a different resolution. As shown in the plane schematic diagram 320, eight squares around the square 312 are actively selected to calculate the scalar field. The square 312 is regarded as the target tree node, and the eight surrounding squares can be regarded as eight neighborhood tree nodes corresponding to the target tree node. Eight rays pointing to the square 312 represent the influence of the node information of the neighborhood tree nodes on the scalar field of the square 312. This method effectively avoids deviations when calculating the local scalar field of the tree node.

Exemplarily, refer to FIG. 3b, which is a schematic diagram of another scalar field provided by an embodiment of the present disclosure. As shown in an image 330, at the junction of different resolutions, a square 331 with a side length of 1 and a square 332 with a side length of 2 are adjacent. In this case, as shown in the image 330, the square 332 with the side length of 2 is divided into four squares with a side length of 1, of which two squares with the side length of 1 are neighbors in the same level and adjacent to the square 331. The square 331 is regarded as the target tree node, and the square 332 is a tree node that is a neighbor of the target tree node but in a different level. In this case, the tree nodes at different levels continue to be divided into four tree nodes in the same level, of which two tree nodes are neighborhood tree nodes in the same level and adjacent to the target tree node. The node information of the four tree nodes can also be obtained through the above-mentioned steps of calculating the node information, which will not be repeated here.

The disclosed embodiment provides a mesh reconstruction method, which determines the level of the mesh that a tree node should extract. According to the determined level of the mesh, a fine reconstruction or a coarse reconstruction can be used in different local areas. The local area refers to the cube corresponding to the tree node. By calculating the extracting level of the mesh, different reconstruction methods based on different level are adopted, and a mesh scale is reduced without losing main details, and a running time and a memory consumption are reduced. In addition, when calculating the local scalar field of the tree node, the calculation direction is modified, and the contribution of the neighboring tree node to the target tree node is calculated, that is, the neighboring tree nodes that are in the same level and adjacent to the target tree node are adaptively selected to avoid introducing additional noise at boundaries of different resolutions, enhance an ability of the reconstructed mesh to resist noise, reduce the deviation generated when calculating the scalar field, further improve the mesh reconstruction accuracy, and obtain the mesh model with multiple resolutions.

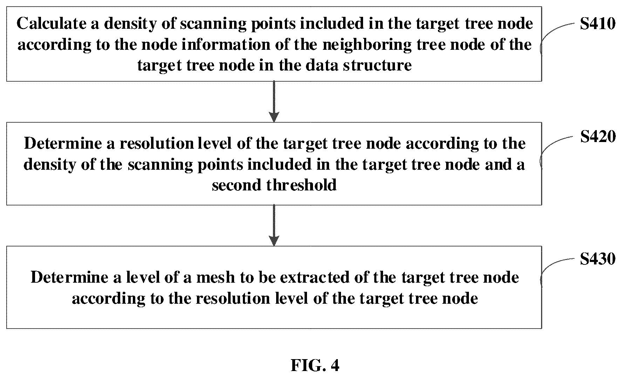

On the basis of the above-mentioned embodiments, FIG. 4 is a flow chart of a mesh reconstruction method provided by the embodiment of the present disclosure. Optionally, the level of the mesh to be extracted of the target tree node is determined according to the target data in the above S120. A first feasible way is to calculate a density of the scanning points included in each target tree node, and determine the level of the mesh to be extracted of the target tree node according to the density; a second feasible way is to determine the resolution level of each scanning point in the three-dimensional scanning data, and determine the level of the mesh to be extracted of the target tree node according to the resolution level of each scanning point; a third feasible way is to jointly determine the level of the mesh to be extracted of the target tree node according to the density and the resolution level of the scanning point. Among them, the first feasible way includes steps S410 to S430 shown in FIG. 4:
S410, a density of scanning points included in the target tree node is determined according to the node information of the neighboring tree node of the target tree node in the data structure.

It can be understood that the density of the scanning points included in the cube corresponding to the target tree node is calculated to improve the accuracy of density estimation. The information of the neighborhood tree nodes of the target tree node should be considered during the estimation. The density calculated by this calculation method can also roughly reflect the number of scanning points around the target tree node. The larger a value of the density, the more scanning points there are around the target tree node, and the closer the average coordinate and average normal of the target tree node are to the true value. The deeper the extracted level of the mesh, the shorter the side length, that is, the closer the extracted side length of the mesh is to a given minimum mesh side length (the preset mesh side length).

Optionally, the above S410 calculates the density of the scanning points in the cube corresponding to the target tree node, which can be specifically implemented by the following steps:
According to the average coordinate in the node information of the neighborhood tree node of the target tree node in the data structure and the average coordinate in the node information of the target tree node, calculating a first distance from the neighborhood tree node to the target tree node; determining a contribution weight of the neighborhood tree node to the target tree node according to the first distance; calculate the density of the scanning points included in the target tree node according to the contribution weight, the weighted sum in the node information of the target tree node and the weighted sum in the node information of the neighborhood tree node.

It can be understood that the first distance from the neighborhood tree node to the target tree node is calculated based on the average coordinate in the node information of the neighborhood tree node in the same level and/or in an adjacent level as the target tree node in the data structure and based on the average coordinate in the node information of the target tree node. That is, when calculating the density, the distance from the average coordinate of the neighborhood tree node to the center of the target tree node is considered. The coordinate of the center of the target tree node can refer to the average coordinate of the target tree node, or can be obtained based on the coordinates of all scanning points in the cube corresponding to the target tree node. The larger the first distance, the greater the weight of the contribution of the neighborhood tree node to the target tree node; the contribution weight of the corresponding neighborhood tree node to the target tree node is determined based on the first distance; the density of the scanning points included in the cube corresponding to the target tree node is calculated by performing a weighted average on the contribution weights and weighted sums of all neighborhood tree nodes of the target tree node, and the weighted sum in the node information of the target tree node.

S420, the resolution level of the target tree node is determined according to the density of the scanning points included in the target tree node and a second threshold.

It can be understood that, based on the above S410, the resolution level of each target tree node is determined according to the density of scanning points in the cube corresponding to each target tree node and the given second threshold, and the target tree node can be marked with the resolution level, where the second threshold includes a plurality of sub-thresholds, an interval between each two adjacent sub-thresholds corresponds to a resolution level, and each resolution level corresponds to one resolution. For example, given resolutions are 2, 3 and 6, and the corresponding resolution levels are respectively recorded as a first level to a third level. The second threshold includes multiple sub-thresholds of 0, 0.3, 0.5 and 0.8. If the density is in an interval between 0 and 0.3, the corresponding target tree node is marked with the first level, and so on. The resolution level of the corresponding target tree node is determined according to the density.

S430, the level of the mesh to be extracted of the target tree node is determined according to the resolution level of the target tree node.

It can be understood that, based on the above S420, in the above example, each resolution level corresponds to one resolution, and the resolution and the mesh side length are one-to-one corresponding. Given n types of resolutions, that is, there are n types of mesh side lengths. The mesh side length is determined according to the resolution level of the target tree node, and the level of the mesh to be extracted also reflects the mesh side length. The deeper the level, the smaller the mesh side length.

Optionally, a second feasible manner for the above S 120 determining the level of the mesh to be extracted of the target tree node according to the target data can also be implemented by the following steps:
Calculating a curvature of each scanning point in the three-dimensional scanning data; determining the resolution level of each scanning point based on the curvature of each scanning point and a first threshold, where the resolution level is divided according to a plurality of preset mesh side lengths; determining the level of the mesh to be extracted of the target tree node based on the resolution level of the scanning point included in the target tree node.

It can be understood that the resolution level of each scanning point in the three-dimensional scanning data is determined, and the resolution level of the scanning point is used as the target data. The level of the mesh to be extracted of the target tree node is determined according to the resolution level of the scanning point in the cube corresponding to the target tree node.

It is understandable that the resolution level of the scanning point can be determined in a variety of ways, among which a first way includes: reconstructing a coarse mesh based on the acquired three-dimensional scanning data, and converting a large number of scanning points into facets. A process of a coarse reconstruction is also relatively fast. After the coarse reconstruction, a smoothing can be performed. Then, a curvature of each scanning point in a curve composed of multiple scanning points is calculated, and the resolution level of each scanning point is determined according to the curvature of each scanning point and the first threshold, where the first threshold also includes a plurality of sub-thresholds, and an interval between each two adjacent sub-thresholds correspond to a resolution level. A second way includes: using a deep learning method, using a training prediction model directly predicting the resolution level of each scanning point, a model training and a prediction method are not described in detail. A third way includes: manually selecting the resolution level of each scanning point through external input. Any of the above methods can be selected to mark the resolution level of each scanning point point by point, that is, mark the side length level of the scanning point in a minimum voxel mesh. The voxel mesh is three-dimensional and can be understood as a cube in the above octree. The level can also be called a layer. The first method and the second method can be used at the same time, and combine the resolution level of the same scanning point determined by the two methods to obtain a final resolution level of the scanning point.

It is understandable that no matter what method is used to determine the resolution level of the scanning point and/or the target tree node, it is based on a given plurality of mesh resolutions, and a division result of the resolution level is the same. The resolution level is divided according to a preset plurality of mesh side lengths (mesh resolutions), that is, the resolution level of the above-mentioned target tree node and the resolution level of the scanning point are both determined based on the same resolution level that is divided.

Optionally, a third feasible manner for the above S120 determining the level of the mesh to be extracted of the target tree node according to the target data can also be implemented by the following steps:
Determining the resolution levels of the scanning points included in the three-dimensional scanning data; calculating the resolution level of the target tree node in the data structure; and determining the level of the mesh to be extracted of the target tree node based on the resolution levels of the scanning points and the resolution level of the target tree node.

It can be understood that in order to determine the resolution level of each scanning point, the resolution level of the target tree node must also be calculated. The level of the mesh that the target tree node should extract is jointly determined based on the resolution level of the scanning point and the resolution level of the target tree node. That is, the above two feasible methods are combined to finally determine the level of the mesh that the target tree node should extract.

The mesh reconstruction method provided by an embodiment of the present disclosure determines the resolution level of the scanning point adaptively by calculating the curvature of the scanning point, and/or determines the resolution level of the tree node by estimating the density of the scanning points included in the tree node. Without providing additional information, the level of the mesh that the tree node should extract is adaptively determined, that is, different resolutions are adaptively set for local areas, so as to facilitate the subsequent use of a fine mesh reconstruction or a coarse mesh reconstruction in different local areas to realize the construction of a multi-resolution mesh model.

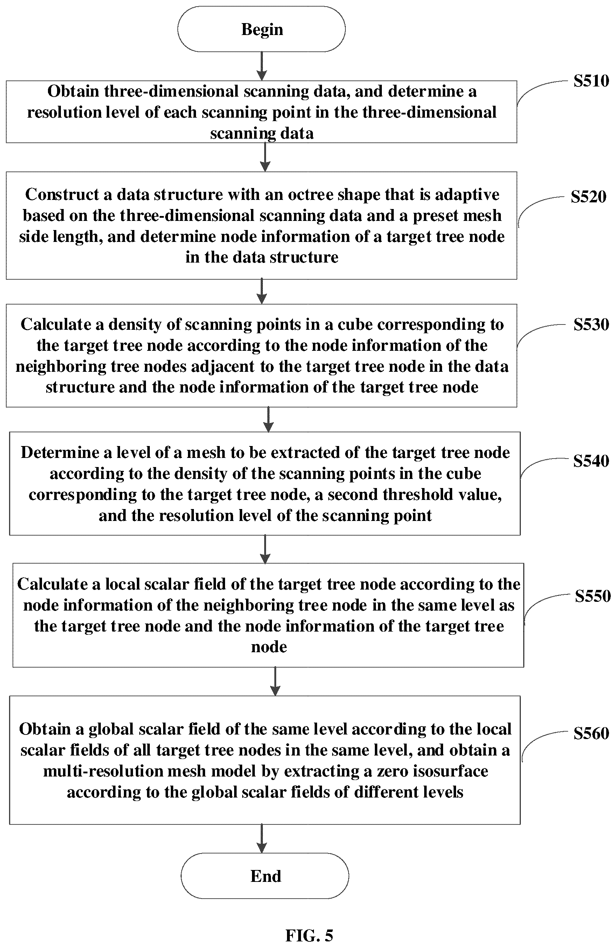

On the basis of the above embodiments, FIG. 5 is a flow chart of a mesh reconstruction method provided by an embodiment of the present disclosure, which is applied to a terminal or a server and specifically includes the following steps S510 to S560 as shown in FIG. 5:
S510, three-dimensional scanning data is obtained, and a resolution level of each scanning point in the three-dimensional scanning data is determined.

It is understandable that scanning data including a large number of scanning points are obtained, and a resolution level is marked for each scanning point through the resolution levels divided according to a given plurality of mesh resolutions.

S520, a data structure with an octree shape that is adaptive is constructed based on the three-dimensional scanning data and a preset mesh side length, and node information of a target tree node in the data structure is determined.

It can be understood that on the basis of the above S510, after obtaining the three-dimensional scanning data, the data structure in the form of octree that can cover all scanning points is constructed based on a side length of a contour of the scanned object and the preset mesh side length, and the node information is calculated based on scanning information of the scanning point in a cube corresponding to the target tree node.

S530, a density of scanning points in a cube corresponding to the target tree node is calculated according to the node information of neighboring tree node adjacent to the target tree node in the data structure and the node information of the target tree node.

It can be understood that, based on the above S520, the neighborhood tree nodes adjacent to the target tree node are determined in the data structure, a first distance from the neighborhood tree node to the target tree node is calculated and a contribution weight is determined based on the first distance, and a weighted average calculation is performed based on weighted sums of the neighborhood tree nodes, a weighted sum and a contribution weight of the target tree node to obtain the density of the scanning points in the cube corresponding to the target tree node.

S540, a level of a mesh to be extracted of the target tree node is determined according to the density of the scanning points in the cube corresponding to the target tree node, a second threshold value, and the resolution levels of the scanning points.

It can be understood that on the basis of the above S530, the resolution level of the target tree node is determined according to the density and the second threshold, and then the level of the mesh to be extracted of the target tree node is determined according to the resolution level of the target tree node and the resolution levels of the scanning points therein. The deeper the level, the shorter the side length of a mesh to be constructed.

S550, a local scalar field of the target tree node is calculated according to the node information of the neighboring tree node in the same level as the target tree node and the node information of the target tree node.

It can be understood that on the basis of the above S540, the local scalar field of the target tree node is calculated based on a calculation direction having been changed, according to the node information of the neighborhood tree node in the same level as the target tree node and the node information of the target tree node, that is, a contribution of the neighborhood tree node to the target tree node is calculated.

S560, a global scalar field of the same level is obtained according to the local scalar fields of all target tree nodes in the same level, and a multi-resolution mesh model is obtained by extracting a zero isosurface according to the global scalar fields of different levels.

It can be understood that, based on the above S550, the global scalar field of the same level is obtained according to the local scalar fields of all target tree nodes in the same level, and the zero isosurface is extracted according to the global scalar fields of different levels to obtain the mesh model with a plurality of resolutions.

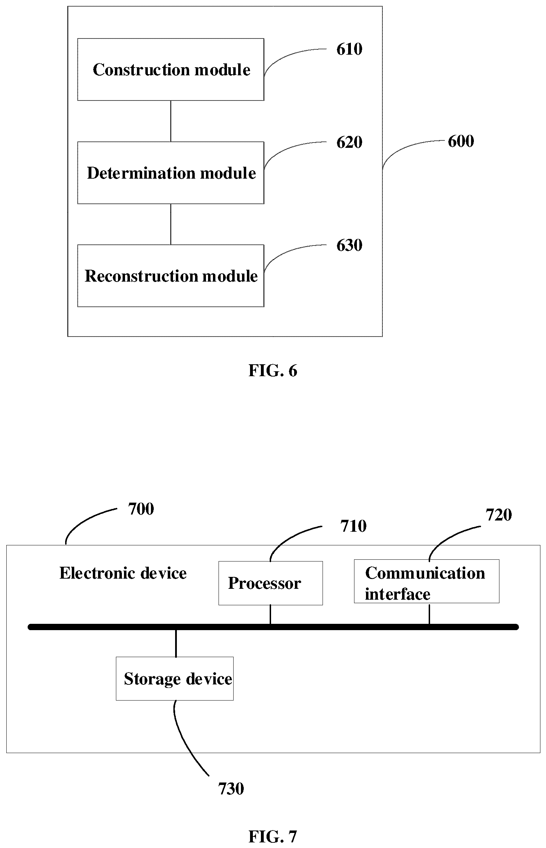

FIG. 6 is a schematic diagram of a structure of a mesh reconstruction apparatus provided by an embodiment of the present disclosure. The mesh reconstruction apparatus provided by an embodiment of the present disclosure can execute a processing flow provided by the above-mentioned embodiment of the mesh reconstruction method. As shown in FIG. 6, the mesh reconstruction apparatus 600 includes a construction module 610, a determination module 620 and a reconstruction module 630, where:
The construction module 610 is used to construct a data structure according to three-dimensional scanning data that is acquired and a preset mesh side length, and determine node information of a target tree node among a plurality of tree nodes included in the data structure;
The determination module 620 is used to determine a level of a mesh to be extracted of the target tree node according to target data, where the target data is obtained according to the three-dimensional scanning data and/or according to the data structure;
The reconstruction module 630 is used to calculate a scalar field of the target tree node according to the node information of the neighboring tree node in the same level as the target tree node and the node information of the target tree node, and obtain a reconstructed mesh model according to the scalar field.

Optionally, the construction module 610 is specifically used to:
Determine a side length of the cubic space occupied by a scanned object;
Based on the three-dimensional scanning data, construct the data structure with a octree shape according to the side length of the cubic space occupied by the scanned object and the preset mesh side length, where the data structure includes a plurality of levels, each level includes a plurality of tree nodes with the cubic shape;
Among all tree nodes included in a preset level of the data structure, determine a tree node including at least one scanning point in a cube as the target tree node;
Calculate the node information of the target tree node according to scanning information of the scanning points included in the target tree node.

Optionally, the construction module 610 is specifically used to:
According to the side length of the cubic space occupied by the scanned object, construct the data structure with the octree shape including all scanning points in the three-dimensional scanning data. During the construction process, if the side length of the cube with the smallest unit in the data structure is less than or equal to the preset mesh side length, a completed data structure is obtained.

Optionally, the construction module 610 is specifically used to:
Calculate an average coordinate of all scanning points included in the target tree node;
Calculate an average normal of all scanning points included in the target tree node;
Calculate a weighted sum of all scanning points included in the target tree node;
Obtaining the node information of the target tree node according to the average coordinate, the average normal and the weighted sum.

Optionally, the determination module 620 is specifically configured to:
Calculate a curvature of each scanning point in the three-dimensional scanning data;
Determine a resolution level of each scanning point according to the curvature of each scanning point and a first threshold, where the resolution level is divided according to a plurality of preset mesh side lengths;
Determine the level of the mesh to be extracted of the target tree node according to the resolution levels of the scanning points included in the target tree node.

Optionally, the determination module 620 is specifically configured to:
Calculate a density of scanning points included in the target tree node according to the node information of the neighboring tree node of the target tree node in the data structure;
Determine a resolution level of the target tree node according to the density of the scanning points included in the target tree node and a second threshold;
According to the resolution level of the target tree node, determine the level of the mesh to be extracted of the target tree node.

Optionally, the determination module 620 is specifically configured to:
Calculate a first distance from the neighboring tree node to the target tree node according to the average coordinate in the node information of the neighboring tree node of the target tree node in the data structure and the average coordinate in the node information of the target tree node;
Determine a contribution weight of the neighborhood tree node to the target tree node according to the first distance;
Calculating the density of the scanning points included in the target tree node according to the contribution weight, the weighted sum in the node information of the target tree node, and the weighted sum in the node information of the neighborhood tree node.

Optionally, the determination module 620 is specifically configured to:
Determine resolution levels of scanning points included in the three-dimensional scanning data;
Calculate the resolution level of the target tree node in the data structure;
Determine the level of the mesh to be extracted of the target tree node according to the resolution levels of the scanning points and the resolution level of the target tree node.

Optionally, the reconstruction module 630 is specifically used to:
Calculate a local scalar field of the target tree node according to the node information of the neighboring tree node in the same level as the target tree node and the node information of the target tree node;
Determine a global scalar field of the same level according to the local scalar fields of all target tree nodes in the same level;
Obtain the reconstructed mesh model by extracting a zero isosurface according to the global scalar fields at different levels.

Optionally, the reconstruction module 630 is specifically used for:
Determine the neighboring tree node in the same level as the target tree node;
According to the average coordinate and the average normal in the node information of the neighborhood tree node, determine a target plane passing through the neighborhood tree node, and calculate a directed distance from the target tree node to the target plane.

The local scalar field of the target tree node is calculated according to the node information of the neighborhood tree node, the node information of the target tree node and the directed distance.

The mesh reconstruction apparatus of the embodiment shown in FIG. 6 can be used to implement the technical solution of the above method embodiment. Its implementation principle and technical effect are similar and will not be described in detail here.

FIG. 7 is a schematic diagram of a structure of an electronic device provided by an embodiment of the present disclosure. The electronic device provided by an embodiment of the present disclosure can execute a processing flow provided by the above embodiment. As shown in FIG. 7, an electronic device 700 includes: a processor 710, a communication interface 720 and a storage device 730; where the computer program is stored in the storage device 730 and is configured so that the processor 710 executes the above-mentioned mesh reconstruction method.

In addition, an embodiment of the present disclosure further provides a computer program product, which includes a computer program or instructions, and when the computer program or instructions are executed by a processor, the mesh reconstruction method as described above is implemented.

According to one or more embodiments of the present disclosure, the present disclosure provides an electronic device, including:
A processor;
A storage device for storing instructions executable by the processor;
The processor is used to read the instructions that are executable from the storage device and execute the instructions to implement any of the mesh reconstruction methods provided in the present disclosure.

According to one or more embodiments of the present disclosure, the present disclosure provides a computer-readable storage medium, where the storage medium stores a computer program, and the computer program is used to execute any of the mesh reconstruction methods provided by the present disclosure.

In addition, the present disclosure also provides a device, which includes:
A processor;
A storage device for storing instructions executable by the processor;

Where the processor is configured to:
Construct a data structure according to three-dimensional scanning data that is obtained and a preset mesh side length, and determining node information of a target tree node among a plurality of tree nodes included in the data structure;
Determine a level of a mesh to be extracted of the target tree node according to target data, where the target data is obtained according to the three-dimensional scanning data and/or according to the data structure;
Calculate a scalar field of the target tree node according to node information of neighboring tree node at a same level as the target tree node and the node information of the target tree node, and obtain a reconstructed mesh model according to the scalar field.

It should be noted that, in this article, relational terms such as "first" and "second" are only used to distinguish one entity or operation from another entity or operation, and do not necessarily require or imply any such actual relationship or order between these entities or operations. Moreover, the terms "include", "comprise" or any other variants thereof are intended to cover non-exclusive inclusion, so that a process, a method, an article or a device including a series of elements includes not only those elements, but also other elements not explicitly listed, or also includes elements inherent to such process, method, article or device. **In** the absence of further restrictions, the elements defined by the sentence "comprise a..." do not exclude the existence of other identical elements in the process, method, article or device including the elements.

The above description is only a specific embodiment of the present disclosure, so that those skilled in the art can understand or implement the present disclosure. Various modifications to these embodiments will be apparent to those skilled in the art, and the general principles defined herein may be implemented in other embodiments without departing from the spirit or scope of the present disclosure. Therefore, the present disclosure will not be limited to the embodiments shown herein, but will conform to the widest scope consistent with the principles and novel features disclosed herein.

### Industrial Applicability

The present application can accurately reconstruct the mesh model, avoid the introduction of additional noise, and enhance the ability of the reconstructed mesh to resist noise. It can well consider the deviation generated when calculating the scalar field, improve the mesh reconstruction accuracy, and has strong industrial practicality.

## Claims

1. A mesh reconstruction method, **characterized in that** the method comprises:
constructing a data structure according to three-dimensional scanning data that is acquired and a preset mesh side length, and determining node information of a target tree node among a plurality of tree nodes comprised in the data structure;
determining a level of a mesh to be extracted of the target tree node according to target data, the target data being obtained according to the three-dimensional scanning data and/or according to the data structure;
calculating a scalar field of the target tree node according to node information of a neighboring tree node in a same level as the target tree node and the node information of the target tree node, and obtaining a reconstructed mesh model according to the scalar field.

2. The method according to claim 1, wherein the three-dimensional scanning data comprises scanning information of a plurality of scanning points, and "constructing a data structure according to three-dimensional scanning data that is acquired and a preset mesh side length, and determining node information of a target tree node among a plurality of tree nodes comprised in the data structure" comprises:
determining a side length of a cubic space occupied by a scanned object;
based on the three-dimensional scanning data, constructing the data structure with an octree shape according to the side length of the cubic space occupied by the scanned object and the preset mesh side length, wherein the data structure comprises a plurality of levels, each of the plurality of levels comprises a plurality of tree nodes with a cubic shape;
determining a tree node comprising at least one scanning point from all tree nodes comprised in a preset level of the data structure as the target tree node;
calculating the node information of the target tree node according to scanning information of the scanning point comprised in the target tree node.

3. The method according to claim 2, wherein "based on the three-dimensional scanning data, constructing the data structure with an octree shape according to the side length of the cubic space occupied by the scanned object and the preset mesh side length" comprises:
constructing the data structure with the octree shape comprising all scanning points in the three-dimensional scanning data, according to the side length of the cubic space occupied by the scanned object, the data structure that is completed being obtained in a construction process when a side length of a cube with a smallest unit in the data structure is less than or equal to the preset mesh side length.

4. The method according to claim 2, wherein the scanning information of each scanning point comprises a coordinate, a normal, and a weight, and "calculating the node information of the target tree node according to scanning information of the scanning point comprised in the target tree node" comprises:
calculating an average coordinate of all scanning points comprised in the target tree node;
calculating an average normal of all scanning points comprised in the target tree node;
calculating a weighted sum of all scanning points comprised in the target tree node;
obtaining the node information of the target tree node according to the average coordinate, the average normal, and the weighted sum.

5. The method according to claim 1, wherein "determining a level of a mesh to be extracted of the target tree node according to target data" comprises:
calculating a curvature of each scanning point in the three-dimensional scanning data;
determining a resolution level of each scanning point according to the curvature of each scanning point and a first threshold, wherein the resolution level is divided according to a plurality of preset mesh side lengths;
determining the level of the mesh to be extracted of the target tree node according to the resolution level of the scanning point comprised in the target tree node.

6. The method according to claim 1, wherein "determining a level of a mesh to be extracted of the target tree node according to target data" comprises:
calculating a density of scanning points comprised in the target tree node according to the node information of the neighboring tree node of the target tree node in the data structure;
determining a resolution level of the target tree node according to a density of scanning points comprised in the target tree node and a second threshold;
determining the level of the mesh to be extracted of the target tree node according to the resolution level of the target tree node.

7. The method according to claim 6, wherein "calculating a density of scanning points comprised in the target tree node according to the node information of the neighboring tree node of the target tree node in the data structure" comprises:
calculating a first distance from the neighboring tree node to the target tree node according to the average coordinate in the node information of the neighboring tree node of the target tree node in the data structure and the average coordinate in the node information of the target tree node;
determining a contribution weight of the neighborhood tree node to the target tree node according to the first distance;
calculating the density of the scanning points comprised in the target tree node according to the contribution weight, the weighted sum in the node information of the target tree node, and the weighted sum in the node information of the neighborhood tree node.

8. The method according to claim 1, wherein "determining a level of a mesh to be extracted of the target tree node according to target data" comprises:
determining a resolution level of a scanning point comprised in the three-dimensional scanning data;
calculating the resolution level of the target tree node in the data structure;
determining the level of the mesh to be extracted of the target tree node according to the resolution level of the scanning point and the resolution level of the target tree node.

9. The method according to claim 1, wherein "calculating a scalar field of the target tree node according to node information of a neighboring tree node in a same level as the target tree node and the node information of the target tree node, and obtaining a reconstructed mesh model according to the scalar field" comprises:
calculating a local scalar field of the target tree node according to the node information of the neighboring tree node in the same level as the target tree node and the node information of the target tree node;
determining a global scalar field of the same level according to the local scalar fields of all target tree nodes in the same level;
obtaining the reconstructed mesh model by extracting a zero isosurface according to the global scalar fields of different levels.

10. The method according to claim 9, wherein "calculating a local scalar field of the target tree node according to the node information of the neighboring tree node in the same level as the target tree node and the node information of the target tree node" comprises:
determining the neighboring tree node in the same level as the target tree node;
determining a target plane passing through the neighborhood tree node according to the average coordinate and the average normal in the node information of the neighborhood tree node, and calculating a directed distance from the target tree node to the target plane;
calculating the local scalar field of the target tree node according to the node information of the neighborhood tree node, the node information of the target tree node and the directed distance.

11. A mesh reconstruction apparatus, **characterized in that** the apparatus comprises:
a construction module, configured for constructing a data structure according to three-dimensional scanning data that is acquired and a preset mesh side length, and determining node information of a target tree node among a plurality of tree nodes comprised in the data structure;
a determination module, configured for determining a level of a mesh to be extracted of the target tree node according to target data, the target data being obtained according to the three-dimensional scanning data and/or according to the data structure;
a reconstruction module, configured for calculating a scalar field of the target tree node according to node information of a neighboring tree node in a same level as the target tree node and the node information of the target tree node, and obtaining a reconstructed mesh model according to the scalar field.

12. An electronic device, **characterized in that** the electronic device comprises:
a storage device;
a processor; and
a computer program;
the computer program being stored in the storage device and configured to be executed by the processor to implement the mesh reconstruction method as claimed in any one of claims 1 to 10.

13. A computer-readable storage medium having a computer program stored thereon, **characterized in that** when the computer program is executed by a processor, the steps of the mesh reconstruction method according to any one of claims 1 to 10 are implemented.
